# EUROPEAN PATENT APPLICATION

(11) **EP 4 783 324 A1**
(43) Date of publication of application: **29.07.2026**
(21) Application number: 25154513.3
(22) Date of filing: 28.01.2025
(51) Int. Cl.: H01M 50/24, H01M 50/249, H01M 50/271, H01M 50/358, H01M 50/367

(54) **BATTERY HOUSING WITH VENTING CHANNEL INTEGRATED IN LOAD BEARING PLATFORM**

(71) Applicant: Volvo Truck Corporation, 405 08 Göteborg (SE)
(72) Inventor: JONSSON, Kasper, SE-417 57 Göteborg (SE); IRANNEZHAD, Mike, SE-413 30 Göteborg (SE); ROUT, Dhirendra, SE-422 54 Göteborg (SE)
(74) Representative: Kransell & Wennborg KB

(57) **Abstract**

A battery housing (100) for an energy storage system in a vehicle (600), the battery housing comprising: a top structure (102) integrally formed with a load bearing platform (104) configured to support external mechanical loads, the top structure including venting channels (106) arranged within the top structure and in fluid communication with an internal volume of the battery housing, the venting channels being configured to guide exhaust gases generated during a thermal runaway event within the battery housing.

## Description

### TECHNICAL FIELD

The disclosure relates generally to a battery housing. In particular aspects, the disclosure relates to a battery housing comprising a top cover comprising venting channels integrally formed with a load bearing platform. The disclosure can be applied to heavy-duty vehicles, such as trucks, buses, construction equipment, and other vehicles or machines using deck plates. Although the disclosure may be described with respect to a particular vehicle, the disclosure is not restricted to any particular vehicle.

### BACKGROUND

Energy storage systems, such as battery packs, are widely used in vehicles to provide electrical power for propulsion and auxiliary systems. These systems are subject to various design and operational challenges, including the need to ensure safety, reliability, and efficient energy use.

During operation, battery packs can experience thermal events due to high energy density and rapid discharge or charging cycles. To address these challenges, designs often incorporate mechanisms for thermal management, structural support, and gas flow control. These features help maintain system integrity, ensure compliance with safety standards, and improve the overall performance of the energy storage system.

Venting systems in battery housings play a critical role in managing exhaust gases during such thermal events. Desirable properties of venting systems include efficient gas flow management, robust structural integration, and effective containment of particles or other byproducts. Despite existing solutions, there remains room for improved venting systems that can combine safety, reliability, and compact design to meet the increasing demands of modern energy storage systems.

### SUMMARY

According to a first aspect of the disclosure, there is provided a battery housing for an energy storage system in a vehicle, the battery housing comprising: a top structure integrally formed with a load bearing platform configured to support external mechanical loads, the top structure including venting channels arranged within the top structure and in fluid communication with an internal volume of the battery housing, the venting channels being configured to guide exhaust gases generated during a thermal runaway event within the battery housing.

A technical benefit of the described battery housing may include that the integration of the top structure with a load-bearing platform provides dual functionality, serving both as a structural support for external mechanical loads and as a housing for venting channels. This integration eliminates the need for separate structural components, potentially reducing the overall weight and complexity of the battery housing while maintaining mechanical robustness.

Additionally, the arrangement of venting channels within the top structure ensures that exhaust gases generated during a thermal runaway event are effectively managed. The venting channels can guide the gases along controlled paths, either out of the housing or back into designated areas within the housing, depending on the system configuration. This flexibility enhances safety by containing and directing the gases to reduce the risk of uncontrolled dispersion, which could otherwise endanger nearby components or occupants.

Furthermore, the fluid communication between the venting channels and the internal volume of the battery housing allows for the effective management of gas flow, ensuring that gases generated during a thermal event are promptly redirected away from sensitive areas.

Optionally in some examples, including in at least one preferred example, the top structure comprises a reinforcement grid formed by a plurality of parallel walls, the reinforcement grid being attached to the top cover to distribute external mechanical loads in the top structure. A technical benefit may include enhanced structural integrity of the top structure, allowing it to withstand external mechanical loads more effectively by distributing forces across the battery housing. This improves the durability of the housing and reduces the likelihood of deformation under load.

Optionally in some examples, including in at least one preferred example, the reinforcement grid is adapted to the shape of the venting channels, and wherein the parallel walls are arranged to align with and support the venting channels within the top structure. A technical benefit may include optimized integration between the reinforcement grid and the venting channels, providing structural support of the top structure with improved protection of the venting channels while maintaining efficient gas flow. This ensures that the structural and fluid management features work cohesively without compromising performance.

Optionally in some examples, including in at least one preferred example, the reinforcement grid is arranged to reach an edge of the top structure to distribute external mechanical loads to the battery housing walls along the sides of the battery housing. A technical benefit may include better load distribution from the top structure to the housing walls, improving overall strength and reducing localized stress, which enhances the load-bearing properties and long-term reliability of the battery housing.

Optionally in some examples, including in at least one preferred example, the load-bearing platform is configured to support the weight of a person standing on the top structure during operation or servicing of the vehicle. A technical benefit may include improved functionality of the battery housing by enabling personnel access for maintenance or servicing. The load-bearing capability ensures safe usage during vehicle operation or servicing scenarios.

Optionally in some examples, including in at least one preferred example, the venting channels are formed by joining a stamped plate with a flat plate, the stamped plate and the flat plate together defining the venting channels within the top structure. A technical benefit may include manufacturing efficiency and structural precision. The use of stamped and flat plates allows for consistent formation of venting channels with precise dimensions while maintaining cost-effectiveness.

Optionally in some examples, including in at least one preferred example, the venting channels are arranged in a serpentine configuration. A technical benefit may include extended flow paths for exhaust gases, allowing for improved cooling, containment of particles, and controlled release of gases.

Optionally in some examples, including in at least one preferred example, the venting channels are arranged to receive exhaust gas from the battery housing, and to guide the exhaust gas through the venting channels and back into the battery housing. A technical benefit may include improved control over gas flow within the system, allowing exhaust gases to be redirected for further management or containment. This can help isolate thermal events and minimize external environmental impacts.

Optionally in some examples, including in at least one preferred example, the venting channels include a single inlet in fluid communication with the internal volume of the battery housing and a single outlet configured to release exhaust gases to the exterior of the battery housing. A technical benefit may include simplicity and efficiency in gas flow management, with a single inlet and outlet design reducing complexity while ensuring safe and controlled exhaust.

Optionally in some examples, including in at least one preferred example, the venting channels include multiple inlets in fluid communication with the internal volume of the battery housing and a single outlet configured to release exhaust gases to the exterior of the battery housing. A technical benefit may include enhanced gas intake capacity, as multiple inlets allow for efficient collection of exhaust gases from different areas of the battery housing depending on where thermal runaway occur, funneling them to a single outlet for controlled release.

Optionally in some examples, including in at least one preferred example, the venting channels include multiple inlets in fluid communication with the internal volume of the battery housing and multiple outlets configured to release exhaust gases to the exterior of the battery housing. A technical benefit may include greater flexibility in gas flow management, with multiple inlets and outlets enabling distributed exhaust release and potentially minimizing the length of the gas flow patch within the battery housing, reducing pressure buildup and enhancing system safety.

Optionally in some examples, including in at least one preferred example, the venting channels comprise particle trapping features arranged to reduce the release of solid particles to the exterior of the battery housing. A technical benefit may include improved environmental and operational safety by minimizing the discharge of solid particles, which can be harmful or hazardous if released.

Optionally in some examples, including in at least one preferred example, the battery housing further comprises a degassing unit positioned at an outlet of the battery housing to release gases to the exterior of the vehicle. A technical benefit may include controlled and safe release of exhaust gases through a dedicated degassing unit, preventing uncontrolled venting and ensuring compliance with safety standards.

Optionally in some examples, including in at least one preferred example, the top structure includes mounting flanges vertically offset relative to the top structure towards the side walls of the battery housing, the offset being configured to create additional internal volume within the battery housing. A technical benefit may include optimized space utilization, with the vertical offset creating additional internal volume for improved integration of components or enhanced cooling efficiency. The mounting flanges also allows loads on the top structure to be distributed to the battery housing walls.

Optionally in some examples, including in at least one preferred example, the mounting flanges are configured to secure the top structure to the side walls while maintaining alignment of the venting channels. A technical benefit may include secure attachment of the top structure, ensuring stability and alignment of the venting channels for effective gas management.

Optionally in some examples, including in at least one preferred example, the top structure is constructed from a material selected from the group consisting of steel, aluminum, or an alloy thereof. A technical benefit may include material versatility, allowing the selection of materials based on desired strength, weight, or thermal properties to meet specific design requirements.

Optionally in some examples, including in at least one preferred example, the top structure is constructed from steel with a thickness in the range of 2 mm to 4 mm, or aluminum with a thickness in the range of 3 mm to 6 mm. A technical benefit may include optimized structural and weight characteristics, ensuring the top structure provides sufficient strength while remaining lightweight.

Optionally in some examples, including in at least one preferred example, the parallel walls of the reinforcement grid extend above the venting channel by at least 3 mm. A technical benefit may include enhanced mechanical support for the venting channels, with the extended walls providing additional strength and improving load distribution.

Optionally in some examples, including in at least one preferred example, the venting channels have an internal channel height of at least 6 mm. A technical benefit may include improved gas flow capacity, with the specified height ensuring adequate volume for exhaust gases during thermal events.

According to a second aspect, there is provided a vehicle comprising: a vehicle frame; and a battery housing according to any one of the preceding claims connected to the vehicle frame. A technical benefit may include integration of the battery housing with the vehicle frame, which ensures structural stability and effective placement of the energy storage system within the vehicle. This configuration may also facilitate efficient routing of venting channels and alignment with other vehicle systems, enhancing overall safety, thermal management, and ease of maintenance. Additionally, it supports modularity, allowing the battery housing to be securely attached and replaced as needed without compromising the integrity of the vehicle structure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary illustration of a battery housing according to an example.
**FIG. 2** is an exemplary illustration of a top structure of a battery housing according to an example.
**FIG. 3** is an exemplary illustration of battery housing according to an example.
**FIGs. 4A-C** are exemplary illustrations of a top structure for a battery housing according to an example.
**FIG. 5** is an exemplary illustration of details of a battery housing according to an example.
**FIG. 6** is an exemplary illustrations of a vehicle comprising a battery housing according to an example.

### DETAILED DESCRIPTION

The detailed description set forth below provides information and examples of the disclosed technology with sufficient detail to enable those skilled in the art to practice the disclosure.

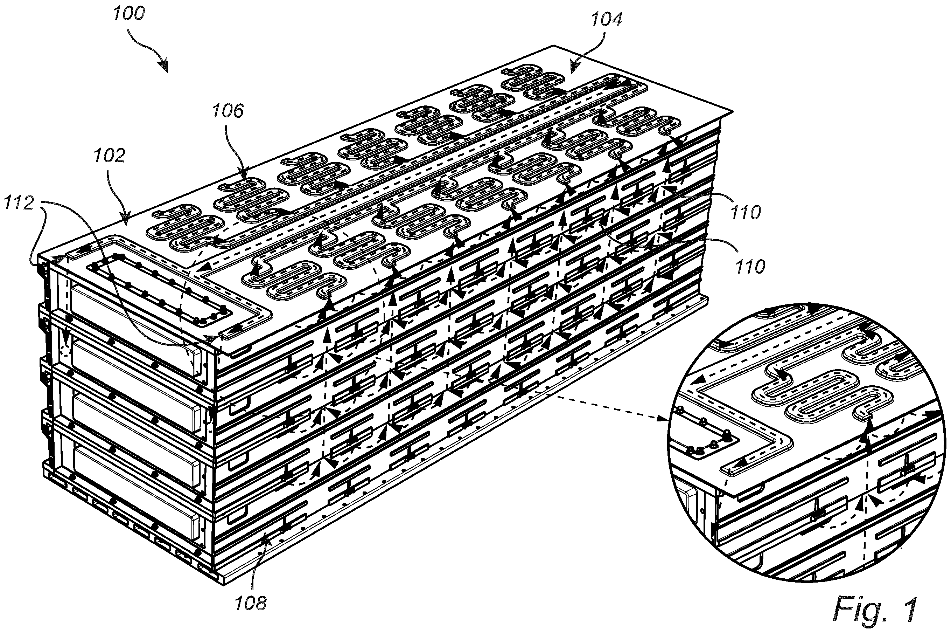

FIG. 1 is an exemplary illustration of a battery housing 100 for an energy storage system in a vehicle 600. The battery housing 100 includes a top structure 102 that is integrally formed with a load-bearing platform 104. The load-bearing platform 104 is configured to support external mechanical loads, such as the weight of a person during operation or servicing.

The top structure 102 further incorporates venting channels 106 arranged within the top structure 102 and in fluid communication with the internal volume of the battery housing 100. These venting channels 106 are configured to guide exhaust gases generated during a thermal runaway event within the battery housing 100, ensuring controlled gas flow and enhancing safety during such events.

As shown in FIG. 1, the top structure 102 of the battery housing 100 is integrally formed to function as both the top structure and the load-bearing platform 104. In the present context, "integrally formed" means that the top structure 102 is a single component or arrangement configured to provide both mechanical support and housing for venting channels 106. This integral formation can result from manufacturing techniques such as stamping, molding, or casting, where the structure is created as a unified piece or assembled from a plurality of pieces. Alternatively, it may involve designing the structure in such a way that its geometry inherently allows it to perform both functions seamlessly. This ensures that the top structure 102 operates as a cohesive and efficient component of the battery housing 100, providing dual functionality without the need for additional assembly or separate structural elements.

In practice, the term "load-bearing" refers to the ability of the platform 104 to withstand significant mechanical stresses without deformation or failure. This includes supporting dynamic loads, such as movement by personnel during maintenance activities, and static loads, such as the placement of tools or other equipment. For example, the load-bearing platform 104 can be configured to withstand a weight in the range of 50-200 kg without deformation. The load-bearing platform 104 distributes these mechanical loads across top structure 102 and the underlying structural components of the battery housing 100, ensuring mechanical stability and reliability.

Another potential problem discovered by the inventors, which the top structure 102 can partially solve or counteract, is the potential for a trailer to make contact with the top of the battery housing 100 during certain vehicle maneuvers. For example, at the start of a steep uphill, the angle formed between the towing vehicle 600 and the trailer may cause the trailer to reach the top of the battery housing 100. Such contact can damage critical components of the battery housing 100. The top structure 102, serving as a catwalk, can act as a relatively inexpensive and simple buffer in such situations. Instead of critical battery components being damaged, the catwalk can absorb the impact or deformation, minimizing repair costs and ensuring the continued functionality of the energy storage system.

FIG. 1 further illustrates that the venting channels 106 are arranged in a serpentine configuration. This arrangement extends the flow path of exhaust gases, allowing for better management of high-temperature gases and reducing their velocity as they travel through the channels. Additionally, FIG. 1 shows that the venting channels 106 are arranged to receive exhaust gases from the internal volume of the battery housing 100, guide the gases through the venting channels 106, and direct them back into designated areas within the battery housing 100.

In particular, FIG. 1 illustrates that the venting channels 106 include multiple inlets 110 in fluid communication with the internal volume of the battery housing 100 and multiple outlets 112 configured to transport exhaust gases back to the battery housing 100 or to the exterior of the battery housing 100. The multiple inlets 110 allow the venting channels 106 to collect exhaust gases from different regions of the internal volume, ensuring efficient gas flow management throughout the battery housing 100. The multiple outlets 112 provide distributed release points for the exhaust gases, which can help to reduce pressure buildup within the battery housing 100 during a thermal runaway event.

The venting channels may further comprise particle trapping features (not shown) arranged to reduce the release of solid particles to the exterior of the battery housing. Particle trapping features may be provided in the form of grids, steps or the like. Moreover, one or more volumes within the battery housing can be formed specifically to gather ejecta produced during a thermal runaway event. A volume within the top structure can be connected to a volume within the main housing, allowing for coordinated containment and management of ejecta. These volumes may also be configured as separate, isolated compartments, ensuring that the gathered ejecta does not interfere with other components of the battery housing, thereby enhancing safety by providing designated areas for containment, minimizing the spread of hazardous materials, and reducing the risk of damage to surrounding components.

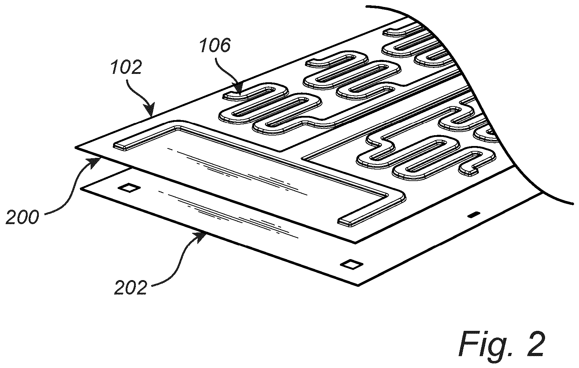

FIG. 2 illustrates a detailed view of the venting channels 106 and the top structure 102 of the battery housing 100. The venting channels 106 are formed by joining a stamped plate 200 with a flat plate 202. The stamped plate 200 includes a series of embossed or recessed regions that, when joined with the flat plate 202, define the internal geometry of the venting channels 106. This method of construction provides several advantages, including manufacturing efficiency and precise control over the dimensions of the venting channels 106. The stamped plate 200 can be readily formed using conventional stamping techniques, allowing for consistent and repeatable production. The flat plate 202 acts as a sealing layer, ensuring the integrity of the venting channels 106 and preventing leaks or deformation during operation. Together, the stamped plate 200 and the flat plate 202 create a robust structure capable of handling the thermal and mechanical stresses experienced during a thermal runaway event.

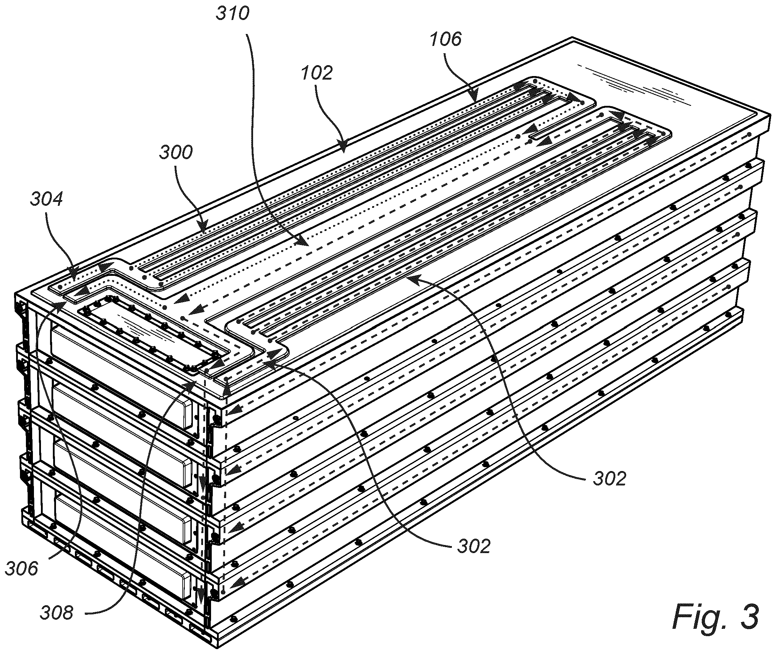

FIG. 3 illustrates an exemplary battery housing 100 featuring two sets of U-shaped venting channels 300, 302. Each venting channel set includes a respective inlet 304 306, arranged to receive exhaust gases from the internal volume of the battery housing 100. The venting channels 300 and 302 are designed to guide the gases along a controlled U-shaped path, ensuring efficient flow management and thermal dissipation.

Both sets of venting channels 300, 302 terminate in a joint outgoing channel portion 310, which connects the venting channels to two outlets 306 and 308 located on a short edge of the battery housing 100. This configuration allows exhaust gases to be directed through a unified pathway before being released to the exterior of the battery housing 100. The U-shaped configuration of the venting channels 300 and 302 enhances the overall length of the gas flow path, which helps to reduce gas velocity, trap particles, and dissipate heat more effectively. The joint outgoing channel portion 310 ensures efficient merging of gas flows from both venting channel sets, minimizing pressure imbalances and optimizing the release of gases through the outlets 306 and 308. This design contributes to the safety and reliability of the energy storage system by maintaining controlled and balanced gas flow during a thermal event.

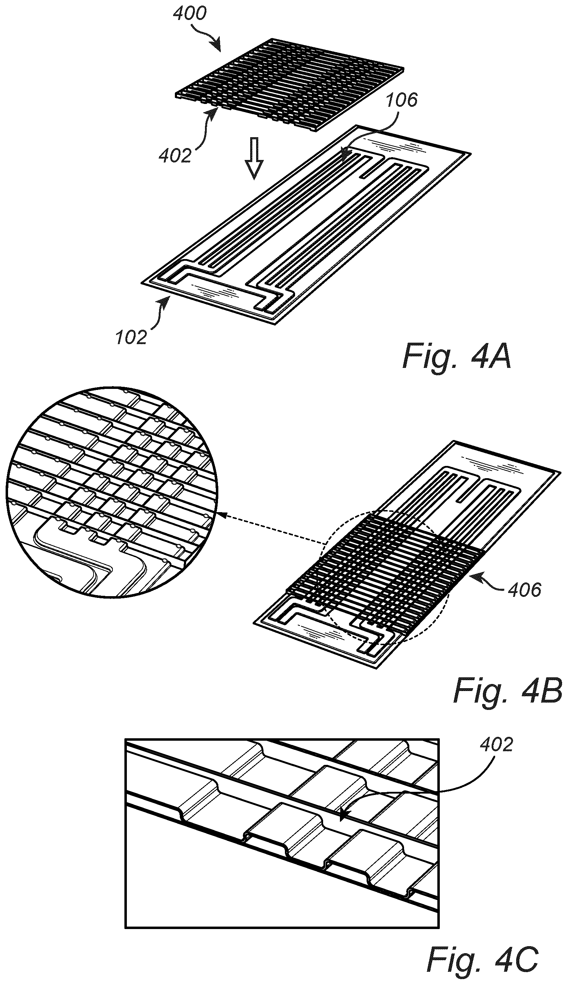

FIGS. 4A-C illustrate stages and details of the integration of a reinforcement grid 400 with the top structure 102 of the battery housing 100. FIG. 4A shows the reinforcement grid 400 and the top structure 102 prior to the attachment of the reinforcement grid 400. The reinforcement grid 400 includes a plurality of parallel walls 402 designed to have a profile aligning with the profile of the venting channels 106 within the top structure 102. This pre-assembly view highlights how the grid 400 is shaped and positioned to complement the geometry of the venting channels 106, ensuring proper alignment for structural and functional integration.

FIG. 4B illustrates the reinforcement grid 400 attached to the top structure 102. The attachment may be achieved, for example, by spot welding, ensuring a secure and durable connection between the grid 400 and the top structure 102. Once attached, the parallel walls 402 of the grid 400 provide mechanical support for the venting channels 106 and enhance the top structure's ability to distribute external mechanical loads effectively. Additionally, the parallel walls 402 extend to an edge 406 of the top structure 102, transferring external loads to the battery housing walls 108 along the sides of the battery housing 100.

FIG. 4C is a close-up view of the reinforcement grid 400 integrated with the venting channels 106. This detailed illustration shows the parallel walls 402 of the grid 400 aligning with and supporting the venting channels 106. It can also be seen that the lower portion of the grid 400 has a profile mirroring the profile of the venting channels and that the upper surface is flat to provide a suitable outer surface of the battery housing. The grid 400 thereby reinforces the venting channels 106, maintaining their structural integrity under mechanical loads and during operation.

Together, FIGS. 4A-C demonstrate how the reinforcement grid 400 and top structure 102 work cohesively to provide enhanced mechanical stability, efficient load distribution, and robust support for the venting channels 106 within the battery housing 100.

Additionally, a thin top layer may be provided to cover the catwalk. This top layer can be a sheet of aluminum with a thickness of a few millimeters, such as approximately 2 mm, serving practical or cosmetic purposes. Practically, the top layer may protect the underlying reinforcement grid and venting channels from environmental exposure, wear, or debris. Cosmetically, it can provide a smooth and visually appealing surface, enhancing the overall aesthetic integration of the battery housing within the vehicle design.

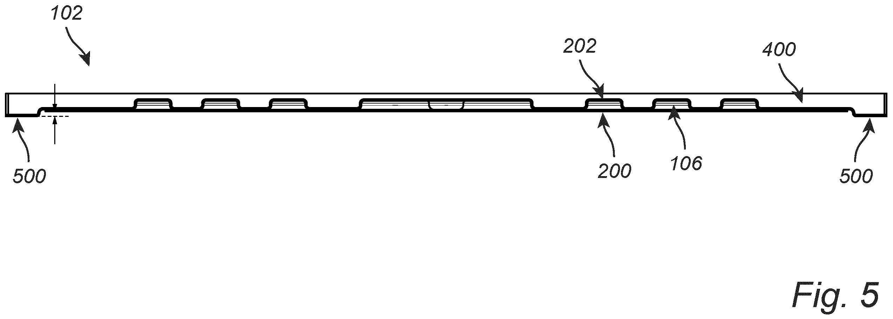

FIG. 5 provides a detailed side view of the venting channels 106 and the reinforcement grid 400 arranged on the top structure 102 of the battery housing 100 where the top structure and the venting channels 106 are formed by joining the previously described stamped plate 200 with a flat plate 202.

The illustration in FIG. 5 also shows mounting flanges 500 integrated into the top structure 102. These mounting flanges 500 are vertically offset relative to the top structure 102 and extend toward the side walls 108 of the battery housing 100. The vertical offset of the mounting flanges 500 creates additional internal volume within the battery housing 100, allowing for improved spatial utilization, such as accommodating additional components or providing enhanced cooling capacity. That the mounting flanges 500 are vertically offset relative to the top structure 102 means that they extend below the lower surface of the top structure 102 which here is generally defined by the flat plate 202. The mounting flanges 500 can be integrally formed in the otherwise flat plate, or they can be separately attached for example by welding.

The mounting flanges 500 are configured to securely attach the top structure 102 to the side walls 108 of the battery housing 100. The described arrangement maintains alignment of the venting channels 106, ensuring proper functionality and preventing misalignment that could impede gas flow. Additionally, the configuration enhances the overall structural stability of the battery housing 100 by ensuring a robust connection between the top structure 102 and the side walls 108.

As shown in FIG. 5, the top structure 102 can be constructed from steel with a thickness in the range of 2 mm to 4 mm, or aluminum with a thickness in the range of 3 mm to 6 mm. This material selection balances strength and weight, ensuring that the top structure 102 provides the necessary mechanical support while maintaining a lightweight design suitable for vehicle applications. Additionally, the reinforcement grid 400 features parallel walls 402 that align with and support the venting channels 106. FIG. 5 illustrates that these parallel walls 402 extend above the venting channels 106 by at least 3 mm. This extension enhances the mechanical support provided to the venting channels 106, increasing their resistance to deformation under mechanical loads and ensuring the structural stability of the top structure 102. The venting channels 106 may further be characterized by an internal channel height of at least 6 mm, as shown in FIG. 5. This height ensures sufficient capacity for exhaust gases during thermal events, facilitating efficient gas flow management while preventing blockages.

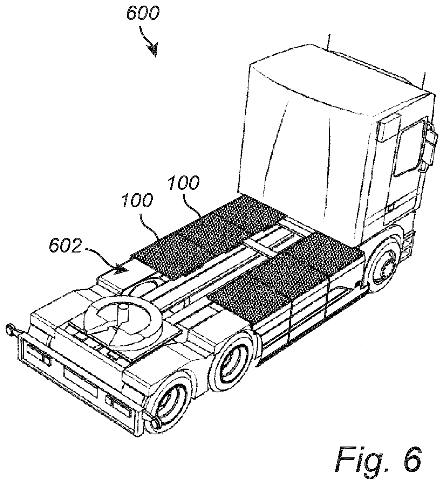

FIG. 6 schematically illustrates a vehicle 600 comprising a vehicle frame 602 and a battery housing 100. The battery housing 100 is connected to the vehicle frame 602, integrating the energy storage system into the vehicle structure. The connection between the battery housing 100 and the vehicle frame 602 provides structural stability and ensures that the battery housing 100 is securely mounted to withstand mechanical stresses encountered during vehicle operation. This integration also facilitates efficient routing of venting channels and thermal management systems within the battery housing 100, aligning them with other components of the vehicle 600. By being part of the vehicle frame 602, the battery housing 100 contributes to the overall safety, reliability, and performance of the vehicle 600

Example 1. A battery housing (100) for an energy storage system in a vehicle (600), the battery housing comprising: a top structure (102) integrally formed with a load bearing platform (104) configured to support external mechanical loads, the top structure including venting channels (106) arranged within the top structure and in fluid communication with an internal volume of the battery housing, the venting channels being configured to guide exhaust gases generated during a thermal runaway event within the battery housing.

Example 2. The battery housing according to example 1, wherein the top structure comprises a reinforcement grid (400) formed by a plurality of parallel walls (402), the reinforcement grid being attached to the top cover to distribute external mechanical loads in the top structure.

Example 3. The battery housing according to example 2, wherein the reinforcement grid is adapted to the shape of the venting channels, and wherein the parallel walls are arranged to align with and support the venting channels within the top structure.

Example 4. The battery housing according to example 2 or 3, wherein the reinforcement grid is arranged to reach an edge (406) of the top structure to distribute external mechanical loads to the battery housing walls (108) along the sides of the battery housing.

Example 5. The battery housing according to any one of the preceding examples, wherein the load bearing platform is configured to support the weight of a person standing on the top structure during operation or servicing of the vehicle.

Example 6. The battery housing according to any one of the preceding examples, wherein the venting channels are formed by joining a stamped plate (200) with a flat plate

(202), the stamped plate and the flat plate together defining the venting channels (106) within the top structure.

Example 7. The battery housing according to any one of the preceding examples, wherein the venting channels are arranged in a serpentine configuration.

Example 8. The battery housing according to any one of the preceding examples, wherein the venting channels are arranged to receive exhaust gas from the battery housing, and to guide the exhaust gas through the venting channels and back into the battery housing.

Example 9. The battery housing according to any one of the preceding examples, wherein the venting channels include a single inlet in fluid communication with the internal volume of the battery housing and a single outlet configured to release exhaust gases to the exterior of the battery housing.

Example 10. The battery housing according to any one of examples 1 to 8, wherein the venting channels include multiple inlets (110) in fluid communication with the internal volume of the battery housing and a single outlet configured to release exhaust gases to the exterior of the battery housing.

Example 11. The battery housing according to any one of examples 1 to 8, wherein the venting channels include multiple inlets (110) in fluid communication with the internal volume of the battery housing and multiple outlets (112) configured to release exhaust gases to the exterior of the battery housing.

Example 12. The battery housing according to any one of the preceding examples, wherein the venting channels comprise particle trapping features arranged to reduce the release of solid particles to the exterior of the battery housing.

Example 13. The battery housing according to any one of the preceding examples, further comprising a degassing unit positioned at an outlet of the battery housing to release gases to the exterior of the vehicle.

Example 14. The battery housing according to any one of the preceding examples, wherein the top structure includes mounting flanges (500) vertically offset relative to the top structure towards the side walls of the battery housing, the offset being configured to create additional internal volume within the battery housing.

Example 15. The battery housing according to example 14, wherein the mounting flanges are configured to secure the top structure to the side walls while maintaining alignment of the venting channels.

Example 16. The battery housing according to any one of the preceding examples, wherein the top structure is constructed from a material selected from the group consisting of steel, aluminum, or an alloy thereof.

Example 17. The battery housing according to any one of the preceding examples, wherein the top structure is constructed from steel with a thickness in the range of 2 mm to 4 mm, or aluminum with a thickness in the range of 3 mm to 6 mm.

Example 18. The battery housing according to any one of examples 2 to 4, wherein the parallel walls (402) of the reinforcement grid extend above the venting channel by at least 3 mm.

Example 19. The battery housing according to any one of the preceding examples, wherein the venting channels have an internal channel height of at least 6 mm.

Example 20. A vehicle (600) comprising: a vehicle frame (602); and a battery housing (100) according to any one of the preceding examples connected to the vehicle frame.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery housing (100) for an energy storage system in a vehicle (600), the battery housing comprising:
a top structure (102) integrally formed with a load bearing platform (104) configured to support external mechanical loads, the top structure including venting channels (106) arranged within the top structure and in fluid communication with an internal volume of the battery housing, the venting channels being configured to guide exhaust gases generated during a thermal runaway event within the battery housing.

2. The battery housing according to claim 1, wherein the top structure comprises a reinforcement grid (400) formed by a plurality of parallel walls (402), the reinforcement grid being attached to the top cover to distribute external mechanical loads in the top structure.

3. The battery housing according to claim 2, wherein the reinforcement grid is adapted to the shape of the venting channels, and wherein the parallel walls are arranged to align with and support the venting channels within the top structure.

4. The battery housing according to claim 2 or 3, wherein the reinforcement grid is arranged to reach an edge (406) of the top structure to distribute external mechanical loads to the battery housing walls (108) along the sides of the battery housing.

5. The battery housing according to any one of the preceding claims, wherein the load bearing platform is configured to support the weight of a person standing on the top structure during operation or servicing of the vehicle.

6. The battery housing according to any one of the preceding claims, wherein the venting channels are formed by joining a stamped plate (200) with a flat plate (202), the stamped plate and the flat plate together defining the venting channels (106) within the top structure.

7. The battery housing according to any one of the preceding claims, wherein the venting channels are arranged in a serpentine configuration.

8. The battery housing according to any one of the preceding claims, wherein the venting channels are arranged to receive exhaust gas from the battery housing, and to guide the exhaust gas through the venting channels and back into the battery housing.

9. The battery housing according to any one of the preceding claims, wherein the venting channels include a single inlet in fluid communication with the internal volume of the battery housing and a single outlet configured to release exhaust gases to the exterior of the battery housing.

10. The battery housing according to any one of claims 1 to 8, wherein the venting channels include multiple inlets (110) in fluid communication with the internal volume of the battery housing and a single outlet configured to release exhaust gases to the exterior of the battery housing.

11. The battery housing according to any one of claims 1 to 8, wherein the venting channels include multiple inlets (110) in fluid communication with the internal volume of the battery housing and multiple outlets (112) configured to release exhaust gases to the exterior of the battery housing.

12. The battery housing according to any one of the preceding claims, wherein the venting channels comprise particle trapping features arranged to reduce the release of solid particles to the exterior of the battery housing.

13. The battery housing according to any one of the preceding claims, wherein the top structure includes mounting flanges (500) vertically offset relative to the top structure towards the side walls of the battery housing, the offset being configured to create additional internal volume within the battery housing.

14. The battery housing according to claim 13, wherein the mounting flanges are configured to secure the top structure to the side walls while maintaining alignment of the venting channels.

15. A vehicle (600) comprising:
a vehicle frame (602); and
a battery housing (100) according to any one of the preceding claims connected to the vehicle frame.
